# EUROPEAN PATENT SPECIFICATION

(11) **EP 0 878 225 B1**
(45) Date of publication and mention of the grant of the patent: **21.06.2006**
(21) Application number: 98201183.5
(22) Date of filing: 14.04.1998
(51) Int. Cl.: B01D 24/10, B01D 24/46, B01D 24/48

(54) **Apparatus and method for filtering water**
Vorrichtung und Verfahren zur Wasserfilterung
Dispositif et procédé de filtrage d'eau

(30) Priority: 10.04.1997 NL 1005789
(43) Date of publication of application: 18.11.1998
(73) Proprietor: Remon B.V., 9363 TH Marum (NL)
(72) Inventor: van der Velde, Ytsen, 9865 AN Opende (NL)
(74) Representative: Smulders, Theodorus A.H.J.

(56) References cited:
- EP-A- 0 352 205
- US-A- 4 187 175

## Description

The invention relates to an apparatus according to the preamble of claim 1 and to a method according to the preamble of claim 3. Such an apparatus and such a method are known from US-A-4 187 175.

An other apparatus which in use carries out a filtering method is known from practice and is offered by applicants under the type designations Remon R500 and Remon R700.

This apparatus forms an installation for reducing the iron content in well water and is particularly used by bulk consumers of water, such as cattle farms. In this known installation well water is supplied to a filter in which the water is aerated with oxygen. Oxygen is therefore dissolved in water, which in turn results in the oxidation of iron in the well water supplied. The water with oxidized iron is passed through a filter bed in which the iron is collected in oxidized form. In order for iron hydroxide and iron oxide collected in the filter bed to be removed from the filter bed from time to time, the filter is regularly backwashed. This backwashing is always carried out when water from the well is hardly, if at all, needed. In practice, this is mostly at night. When backwashing the filter, compressed air is also passed through the bed, as a result of which the bed is set in movement and the iron hydroxide and iron oxide separate better from the filter material.

Backwashing the filter costs water and energy and additionally involves discharge of backwash water. It is an object of the invention to provide an apparatus and a method by which water and energy consumption involved in the backwashing as well as water discharge involved in the backwashing can be limited.

According to a first aspect of the present invention this object is obtained by constructing an apparatus of the initially indicated type in accordance with the characterizing part of claim 1. According to a second aspect of the present invention this object is obtained by carrying out a method for the initially indicated type in accordance with the characterizing part of claim 6.

By carrying out the backwashing in dependence on the degree of pollution of the filter, the filter can be kept from being backwashed while this is no longer necessary in view of the degree of pollution of the filter. The invention enables carrying out the backwashing of the filter in dependence on the amount of material filtered out in use and the adhesion of the filtered material to the filter bed. These variables inter alia depend on the volume of water consumed and the origin of the water. When processing well water, for instance, the phenomenon occurs that the iron content is often not constant but shows fluctuations with time, which are probably caused by changes in subterraneous water currents.

Special embodiments and elaborations of the invention are laid down in the dependent claims.

Further objects, elaborations, effects and advantages of the invention will be explained below in more detail by means of a practical example most preferred at this moment, with reference to the accompanying drawings which diagrammatically show an apparatus according to the invention.

The apparatus shown by way of example is a deferrizing installation for reducing the iron content of well water.

The installation shown connects to a driven well 20 with filter material 21 and a filter pipe 22 extending through the filter material. The structure of such a well is known per se.

From the well 20 a supply line 42 extends to a filter vessel 13. Connected to the filter vessel 13 is a delivery line 43 leading to draw-off provisions 38.

The supply line 42 includes a pump 3 and non-return valves 1, 2. The non-return valves 1, 2 ensure that the pump 3 remains filled with water, also when no water is supplied for some time. The supply line 42 further includes a pneumatically operated stop valve 6, which is operable by excess pressure in a line 36.

In the filter vessel 13 the supply line 42 terminates in a set of sprayers 23. The filter vessel 13 further comprises an amount of filter material 24 and a level switch 4 as well as, near the bottom, a grid 30. The level switch 4 is connected with the pump 3 in the supply line for switching on the pump when the water level in the filter vessel 13 is below a specific level. Also connected to the filter vessel are a backwash line 44, a recirculation line 45 and a discharge line 46.

The backwash line is closable by a pneumatically operated valve 5 operable by compressed air in a line 35. Via a magnetically operable valve 18 the compressed air lines 35, 36 can be put into communication with and shut off from a pressure vessel 19 which communicates via an air supply line system 47 with a compressor 15 operated by a pressure switch 8. The compressor 15 is also connected with the backwash line 44 via the air supply line system 47, and between the compressor 15 and the backwash line 44 the air supply line system 47 includes a magnetic valve 16. A non-return valve 39 between, on the one hand, the compressor 15 and, on the other hand, the pressure vessel 19 and the pressure lines 35, 36 ensures that the pressure in the lines 35, 36 is maintained when it temporarily decreases owing to a substantial decrease in the air supply line system 47.

The recirculation line 45 terminates in a set of sprayers 27.

The discharge line 46 includes a clearness sensor 41 which is connected with a control unit 29 for transmitting signals representing the detected clearness of passing water.

The delivery line 43 includes a pump 7. Between the pump 7 and the filter vessel 13 the delivery line further includes a pressure switch 37 which is connected with the control unit 29 for transmitting signals indicating whether the pressure in the delivery line 43 between the filter vessel 13 and the pump 7 has fallen below a specific reduced pressure.

Downstream of the pump, successively in and along the delivery line 43, there are provided a non-return valve 9, a pressure switch for switching off the pump 7 when a specific pressure has been obtained, a branch line to a pressure vessel 28 and a pneumatic valve 10 operable by pressure in the line 36.

In use, when drawing off water from draw-off provisions 38, the pressure in the delivery line 43 downstream of the pump 7, as observed by the pressure sensor 34 downstream of the pump 7, falls below a predetermined level. In response thereto, the pump 7 is switched on by the control unit. In principle, this could also be done without the control unit.

When, subsequently, the level of the water in the filter vessel 13 falls below a predetermined level, the pump 3 upstream of the filter vessel 13 is also switched on. This pump 3 has sufficient capacity to always keep up with the pump 7 downstream of the filter vessel 13. The pump 3 in the supply line 42 pumps up water from the well 20 and sprays it into the filter vessel 13, so that oxygen is dissolved in the water. Of course, oxygen could also be dissolved in the water in another manner, such as by stirring and/or blowing air under water. The stop valve 5 in the backwash line 44 is then closed, and the stop valve 6 in the supply line 42 (which is operated simultaneously with the stop valve 36 in the delivery line 43) is then opened.

By aerating with oxygen, iron is converted in the pumped-up well water into iron hydroxide and iron oxide which precipitates and is collected by the filter material 24. The water leaves the filter vessel 13 via the grid 30, which is used for preventing filter material from leaving the filter vessel 13, and which enables a uniform distribution of the water discharge over the bottom side of the filter vessel 13. When leaving the filter vessel 13, the treated water is therefore nearly completely iron-free.

In the long run, however, more and more iron hydroxide and iron oxide accumulate in the filter material, which therefore becomes less effective and more and more clogged. This result in the reduced pressure between the pump 7 and the filter vessel 13 increasing more and more when the pump 7 is in use. At a given moment this reduced pressure observed by the sensor 37 reaches a signal which causes the sensor to signal the control unit that the adjusted maximum reduced pressure has been reached. In response thereto, the control unit initiates a backwash cycle. By only initiating the backwash cycle when the clogging of the filter has progressed to the extent that backwashing is really useful, unnecessarily frequent backwashing is prevented. Also, in case of a temporarily increased deposit of material in the filter, late backwashing is prevented, as a result of which the filter could become clogged too much and insufficient water yield and/or superheating of the pump 7 threatens. It is to be noted that the degree of clogging can also be measured in another manner, e.g. by measuring the throughput at a fixed pressure drop over the filter or by measuring the throughput and the pressure drop over the filter. However, arranging a pressure sensor between a pump and the filter offers the advantage that a single, simple sensor is sufficient.

It is to be noted that any fluctuations in the resistance of the water in the filter material can be eliminated by only starting a backwash cycle when during a specific minimum period of time the reduced pressure has been below a specific value or by always comparing an average reduced pressure over a longer time window with a limit value. Further, in response to reaching a limit value, a point of time at which little water is used may be awaited as well. On the basis of the average development of the degree of clogging, it may further be predicted by means of time series analysis in which night a backwashing must be effected to most closely approach a specific limit value.

A backwash cycle starts by closing the valves 6, 10 in the supply line 42 and in the delivery line 43 and by opening the valve 5 in the backwash line 44. To this end, opening of the magnetic valve 18 by the control unit 29 is sufficient, as a result of which the lines 35, 36 are pressurized. Subsequently, the pump 3 in the supply line 42 is operated, thus washing water through the filter material against the normal direction of flow. When the level of the water in the filter vessel 13 reaches the discharge line 46, the water flows, while entraining separated iron hydroxide and iron oxide and, if any, other solid material from the vessel 13 and is discharged via the discharge line 46. By operating the valve 16 in the air supply line system 47, air can be injected into the filter material via the grid 30, which air provides a strong mutual movement of particles of the filter material 24. This enhances the separation of material precipitated on the filter material 24.

During the backwashing the clearness of the water discharged is monitored by the clearness sensor 41. When the clearness exceeds a specific limit value or exceeds a limit value for a specific period of time, the backwashing is stopped. In fact, reaching a specific clearness indicates that only very little material is still backwashed and that it is therefore no longer efficient to continue the backwashing. Unnecessarily prolonged backwashing, thereby using and discharging an unnecessarily large amount of water and consuming unnecessarily much energy, can thus be prevented. Also, when the impurities very slowly separate from the filter, unduly brief backwashing is prevented. Depending on the type of filter used, different measuring methods may of course be used for determining the extent to which material separated from the filter is entrained in the backwash water.

When the backwashing has been finished, the pump 3 in the supply line 42 is switched off, the valve 5 in the backwash line 44 is closed and the valves 6, 10 are still left in the closed position. By further switching on the pump 7 in the delivery line 43, the water is pumped for some time in the normal direction of flow through the filter material 24, thus bringing it again into the packed condition suitable for effective use. Also, the iron and iron hydroxide and iron oxide contained in water used for backwashing is thus removed from the water, at least for the greater part. The cleaning of the filter material 24 is thus complete, and the installation is ready again for further normal use.

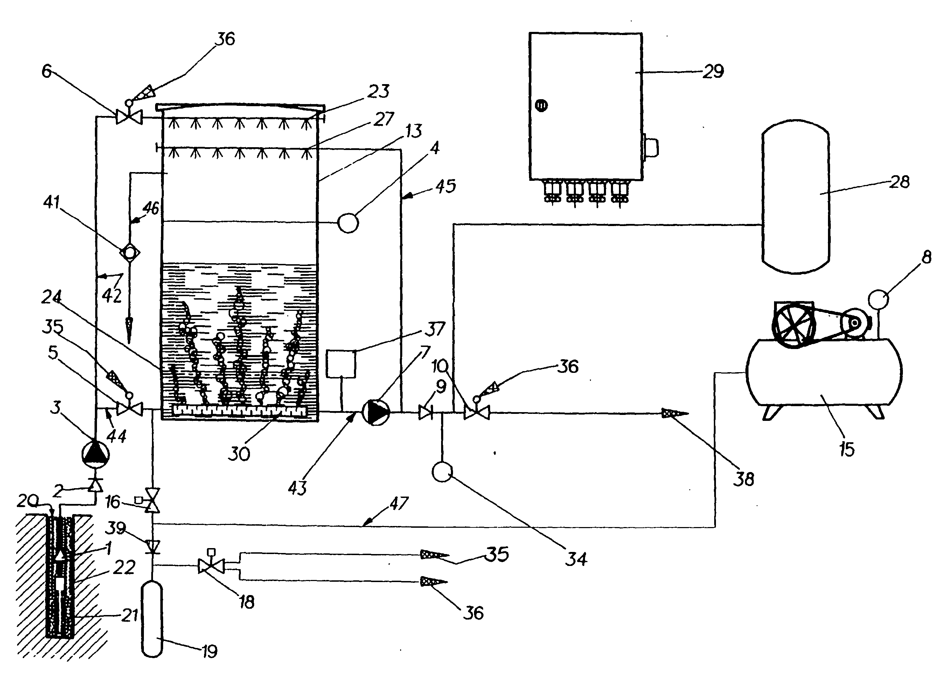

## Claims

1. An apparatus for filtering water, comprising:
a supply line (42),
a filter (13) with a filter mass (24) connected to the supply line (42),
a delivery line (43) connecting to the filter (13) downstream of the filter mass (24),
a backwash line (44) connecting to the filter (13) downstream of the filter mass (24),
a discharge line (46) for discharging backwash water connecting to the filter (13) upstream of the filter mass (24),
a valve structure (5, 6, 10) for passing water, in the operative condition, from the supply line (42) via the filter (13) to the delivery line (43) and for passing water, in the backwash condition, via the backwash line (44), the filter (13) to the discharge line (46), and
a control unit (29) for switching said valve structure (5, 6, 10) between said operative condition and said backwash condition, and
at least one sensor (37, 41) for monitoring a parameter depending on the degree of pollution of the filter (13), said at least one sensor (37, 41) being connected to the control unit (29) which is arranged to operate said valve structure (5, 6, 10) in response to signals received from said at least one sensor (37, 41),
**characterized by**
at least one pump (3, 7) for pumping water through the supply line (42), through the filter (13) and through the delivery line (43),
wherein said at least one sensor (41) is provided and arranged to generate a signal depending on the degree of pollution of water backwashed through the discharge line (46).

2. An apparatus according to claim 1, wherein said at least one sensor is a clearness sensor (41).

3. A method for filtering water, comprising:
supplying water to be treated,
passing supplied water through a filter (13) in a first direction,
repeatedly backwashing the filter (13), and
monitoring at least one parameter depending on the degree of pollution of the filter (13), wherein
the backwashing of the filter (13) is carried out in dependence on the value of said, at least one, parameter depending on the degree of pollution of the filter (13),
**characterized in that** the backwashing of the filter (13) is stopped whenever a parameter depending on the degree of pollution of water backwashed through the filter (13) has reached a specific value.

4. A method according to claim 3, wherein said parameter value depending on the degree of pollution of water backwashed through the filter (13) is an upper limit of the translucency of water backwashed through the filter (13).

## Patentansprüche

1. Vorrichtung zum Filtern von Wasser, mit:
einer Versorgungsleitung (42),
einem mit der Versorgungsleitung (42) verbundenen Filter (13) mit einer Filtermasse (24),
einer Zuführleitung (43), die mit dem Filter (13) stromabwärts von der Filtermasse (24) verbunden ist,
einer Rückspülleitung (44), die mit dem Filter (13) stromabwärts von der Filtermasse (24) verbunden ist,
einer zum Auslassen von Rückspülwasser vorgesehenen Auslassleitung (46), die mit dem Filter (13) stromaufwärts von der Filtermasse (24) verbunden ist,
einer Ventilstruktur (5,6,10), die im Betriebszustand Wasser von der Versorgungsleitung (42) über das Filter (13) zu der Zuführleitung (43) durchlässt, und im Rückspülzustand Wasser über die Rückspülleitung (44) und das Filter (13) zu der Auslassleitung (46) durchlässt, und
einer Steuereinheit (29) zum Schalten der Ventilstruktur (5,6,10) zwischen den Betriebszustand und dem Rückspülzustand, und
mindestens einem Sensor (37,41) zum Überwachen eines Parameters, der vom Verschmutzungsgrad des Filters (13) abhängt, wobei der mindestens eine Sensor (37,41) mit der Steuereinheit (29) verbunden ist, welche derart ausgelegt ist, dass sie die Ventilstruktur (5,6,10) als Reaktion auf die von dem mindestens einen Sensor (37,41) empfangenen Signale betätigt,
**gekennzeichnet durch**
mindestens eine Pumpe (3,7) zum Pumpen von Wasser **durch** die Versorgungsleitung (42), **durch** das Filter (13) und **durch** die Zuführleitung (43),
wobei der mindestens eine Sensor (41) derart ausgebildet und angeordnet ist, dass er ein Signal in Abhängigkeit vom Verschmutzungsgrad des **durch** die Auslassleitung (46) rückgespülten Wassers erzeugt.

2. Vorrichtung nach Anspruch 1, bei der der mindestens eine Sensor ein Klarheitssensor (41) ist.

3. Verfahren zum Filtern von Wasser, mit den folgenden Schritten:
Zuführen zu behandelnden Wassers,
Durchleiten des zugeführten Wassers durch ein Filter (13) in einer ersten Richtung,
wiederholtes Rückspülen des Filters (13), und
Überwachen mindestens eines Parameters, der vom Verschmutzungsgrad des Filters (13) abhängt, wobei
das Rückspülen des Filters (13) in Abhängigkeit von dem Wert des mindestens einen vom Verschmutzungsgrad des Filters (13) abhängenden Parameters ausgeführt wird,
**dadurch gekennzeichnet, dass** das Rückspülen des Filters (13) jedes Mal gestoppt wird, wenn ein Parameter, der vom Verschmutzungsgrad des durch das Filter (13) rückgespülten Wassers abhängt, einen bestimmten Wert erreicht hat.

4. Verfahren nach Anspruch 4, bei dem der Parameterwert, der vom Verschmutzungsgrad des durch das Filter (13) rückgespülten Wassers abhängt, ein oberer Grenzwert der Durchsichtigkeit des durch das Filter (13) rückgespülten Wassers ist.

## Revendications

1. Appareil pour filtrer de l'eau, comprenant :
une conduite d'alimentation (42),
un filtre (13) muni d'une masse filtrante (24) reliée à la conduite d'alimentation (42),
une conduite de transport (43) reliée au filtre (13) en aval de la masse filtrante (24),
une conduite de lavage (44) reliée au filtre (13) en aval de la masse filtrante (24),
une conduite de refoulement (46) pour évacuer l'eau de lavage reliée au filtre (13) en amont de la masse filtrante (24),
une structure de vanne (5, 6, 10) pour faire passer l'eau, lors du fonctionnement, de la conduite d'alimentation (42), via le filtre (13), à la conduite de transport (43), et pour faire passer l'eau, lors du lavage, via la conduite de lavage (44), par le filtre (13), dans la conduite de refoulement (46), et
une unité de commande (29) pour commuter ladite structure de vanne (5, 6, 10) entre ladite condition de fonctionnement et ladite condition de lavage, et
au moins un capteur (37, 41) pour contrôler un paramètre dépendant du degré de pollution du filtre (13), ledit capteur au moins (37, 41) étant relié à l'unité de commande (29) qui est agencée pour faire fonctionner ladite structure de vanne (5, 6, 10) en réponse aux signaux reçus de la part dudit capteur au moins (37, 41),
**caractérisé par**
au moins une pompe (3, 7) pour pomper de l'eau dans la conduite d'alimentation (42), par le filtre (13) et par la conduite de transport (43),
dans lequel ledit capteur au moins (41) est prévu et agencé pour générer un signal en fonction du degré de pollution de l'eau passant dans la conduite de refoulement (46).

2. Appareil selon la revendication 1, dans lequel ledit capteur au moins est un capteur de clarté (41).

3. Procédé de filtrage de l'eau, comprenant :
la fourniture de l'eau à traiter,
le passage de l'eau fournie dans un filtre (13) dans une première direction,
le lavage répété du filtre (13), et
le contrôle d'au moins un paramètre dépendant du degré de pollution du filtre (13), dans lequel
le lavage du filtre (13) est effectué en fonction de la valeur dudit paramètre au moins dépendant du degré de pollution du filtre (13),
**caractérisé en ce que**
le lavage du filtre (13) est arrêté lorsqu'un paramètre dépendant du degré de pollution de l'eau passant dans le filtre (13) a atteint une valeur spécifique.

4. Procédé selon la revendication 3, dans lequel ladite valeur du paramètre dépendant du degré de pollution de l'eau passant dans le filtre (13) est une limite supérieure de la translucidité de l'eau passant dans le filtre (13).
